(19) Europäisches Patentamt
European Patent Office
Office européen des brevets

(11) EP 0 763 912 B1

## (12) FASCICULE DE BREVET EUROPEEN

(45) Date de publication et mention de la délivrance du brevet:
**14.07.1999 Bulletin 1999/28**

(51) Int Cl.⁶: $H04L\ 7/00$, $H04B\ 10/18$

(21) Numéro de dépôt: **96401919.4**

(22) Date de dépôt: **09.09.1996**

(54) **Doubleur tout optique et régénérateur de solitons utilisant le doubleur**

Rein optischer Frequenzverdoppler und dieser verwendender Solitonregenerator

All-optical doubler and soliton regenerator using the doubler

(84) Etats contractants désignés:
**DE ES GB IT NL SE**

(30) Priorité: **14.09.1995 FR 9510763**

(43) Date de publication de la demande:
**19.03.1997 Bulletin 1997/12**

(73) Titulaire: **ALCATEL**
**75008 Paris (FR)**

(72) Inventeur: **Bigo, Sebastien**
**91120 Palaiseau (FR)**

(74) Mandataire: **Smith, Bradford Lee et al**
**COMPAGNIE FINANCIERE ALCATEL**
**Dépt. Propr. Industrielle,**
**30, avenue Kléber**
**75116 Paris (FR)**

(56) Documents cités:
- ELECTRONICS LETTERS, vol. 30, no. 21, 13 Octobre 1994, pages 1777-1778, XP000476409 NAKAZAWA M ET AL: "80GBIT/S SOLITON DATA TRANSMISSION OVER 500KM WITH UNEQUAL AMPLITUDE SOLITONS FOR TIMING CLOCK EXTRACTION"
- ELECTRONICS LETTERS, vol. 29, no. 2, 21 Janvier 1993, STEVENAGE GB, pages 231-233, XP000331631 S.KAWANISHI ET AL: "64 TO 8 GBIT/S ALL-OPTICAL DEMULTIPLEXING EXPERIMENT WITH CLOCK RECOVERY USING NEW PHASE LOCK LOOP TECHNIQUE"
- ELECTRONICS LETTERS, vol. 29, no. 15, 22 Juillet 1993, STEVENAGE GB, pages 1313-1314, XP000391944 K.UCHIYAMA ET AL: "EFFECTS OF CONTROL-SIGNAL PULSE WALK-OFF ON BER PERFORMANCE OF NONLINEAR OPTICAL LOOP MIRROR DEMULTIPLEXER"
- IEICE TRANSACTIONS ON COMMUNICATIONS, vol. E77-B, no. 4, Avril 1994, TOKYO JP, pages 441-448, XP000462094 S.KAWANISHI ET AL: "100 GBIT/S TRANSMISSION USING ALL OPTICAL CIRCUITS"

## Description

L'invention concerne le domaine de télécommunications sur fibre optique, et plus particulièrement des télécommunications sur des longues distances. Il est connu, pour des liaisons très longues distances à fibre optique, d'utiliser un signal de type dit "soliton" ayant des propriétés spectrales particulières qui permettent au signal de se propager sur la fibre dispersive sans dispersion chromatique appréciable, c'est-à-dire que l'on utilise la dépendance de l'indice de réfraction sur l'intensité du signal pour contrebalancer la dispersion chromatique ou vice-versa. La forme spectrale du signal est préservée malgré les effets de la distance de propagation, qui se résument ainsi principalement à des pertes de ligne. Ces pertes de ligne peuvent être compensées par une amplification optique en ligne, par exemple à l'aide d'un amplificateur à fibre dopée Erbium, ou "EDFA" en anglais.

Pour la transmission par solitons avec amplification en ligne (EDFA) les problèmes qui restent à résoudre sont connus :

1) la gigue Gordon-Haus qui cause une incertitude temporelle de l'arrivée des bits du signal ;
2) l'accumulation de bruit provenant de l'amplification de l'émission spontanée dans les amplificateurs optiques (ASE en anglais).

Ces problèmes peuvent être minimisés en effectuant une régénération des solitons périodiquement le long de la liaison. Une régénération comprend typiquement une amplification optique pour compenser les pertes de ligne et éventuellement les pertes d'insertion du dispositif de régénération ; une récupération d'horloge à partir du train de bits du signal à régénérer ; une modulation synchrone des solitons, à partir de ce signal d'horloge récupéré, pour éliminer la gigue ; et un filtrage afin d'éliminer le socle de bruit ASE ainsi que de recentrer les solitons dans leur fenêtre temporelle et de restaurer leur forme spectrale optimale. Un tel système de régénération connu de l'art antérieur est décrit par exemple dans le document D1, cité dans la présente demande en tant que description de l'art antérieur :

1) Concernant la modulation synchrone avec filtrage, D1 = H. Kubota et M. Nakazawa, (1993), "Soliton transmission control in time and frequency domains", IEEE J. Quantum Electronics v.29, n°7, pp.2189-2197, July 1993. démontre l'intérêt théorique par le calcul de cette méthode. Aucune solution pratique n'est préconisée, mais il est fait référence à une expérience de transmission à 10 Gbit/s sur 1 million de kilomètres dans D2= Nakazawa et al., (1993), "Experimental demonstration of soliton data transmission over unlimited distances with soliton control in time and frequency domains", Electronics Letters, v.29, n°9, pp.729-730, 29 avril 1993. Ce document D2 enseigne l'utilisation d'un modulateur optique en LiNbO$_3$ pour effectuer la modulation synchrone des solitons.

Pour effectuer la récupération d'horloge, deux types de procédé sont envisageables : ceux qui demandent l'extraction d'une partie du signal optique et sa conversion en un signal électronique ; et ceux qui ne demandent pas de conversion optoélectronique.

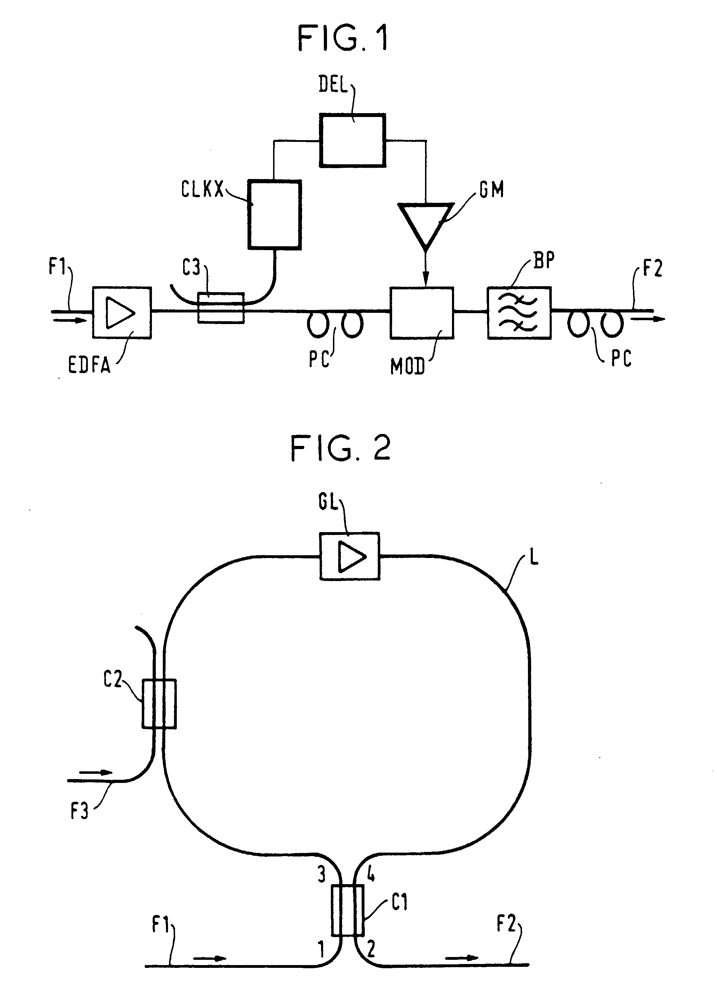

Le premier type de système est décrit par exemple dans le document D2 précité, tel que montré schématiquement sur la figure 1. Le problème avec cette solution est que le débit de signaux à régénérer ne pourra dépasser les 20 à 30 Gbit/s (10 Gbit/s dans le document D2), à cause des limites technologiques actuelles sur la vitesse maximale des circuits électroniques. Dans D2, un modulateur en LiNbO$_3$ est commandé par un signal électronique de commande généré dans un circuit d'horloge à partir du signal de solitons en ligne. Les moyens de récupération d'horloge comprennent un coupleur optique C3 pour l'extraction d'une partie du signal optique qui se propage entre l'entrée F1 et la sortie F2 ; un circuit d'extraction d'horloge CLKX, une ligne à retard pour fournir un délai DEL, et un amplificateur GM pour fournir la puissance de commande nécessaire pour faire fonctionner le modulateur MOD en LiNbO$_3$. Accessoirement, la figure 1 montre un amplificateur optique d'entrée (EDFA) pour pallier les pertes d'insertion du circuit de régénération ; des dispositifs de contrôle de polarisation (PC) biréfringents et un filtre passe-bande BP pour resserrer la distribution spectrale de l'énergie des solitons.

Pour s'affranchir des limites imposées sur le débit maximal par l'utilisation d'un circuit électronique de récupération d'horloge, l'homme de l'art connaît des systèmes utilisant le multiplexage et démultiplexage pour augmenter le rythme bits et donc le débit lors d'une transmission, et ensuite pour diminuer le rythme d'horloge extrait du train de bits du signal à la réception. On peut, par exemple, extraire l'horloge à un rythme de 10 Gbit/s, pour être compatible avec l'électronique, et ensuite doubler la fréquence de ce signal d'horloge avant de l'appliquer à un modulateur d'un régénérateur d'un signal solitons ayant un débit double de 20 Gbit/s.

De tels systèmes sont décrits dans les documents suivants, cités dans la présente demande en tant que descriptions de l'art antérieur.

D3 = Kawanishi, S. et al., "64 to 8 Gbit/s all optical demultiplexing with clock recovery using new phase lock loop technique", Elect. Lett. 29 (2) p. 231 (1993) décrit l'extraction d'un signal d'horloge à 8 GHz à partir d'un train de bits à 64 Gbit/s à des fins de démultiplexage, à l'aide d'une boucle à verrouillage de phase (PLL en anglais) comprenant un amplificateur à diode laser aux ondes progressives (TW-LDA en anglais).

D4 = Kamatani, O. et al., "Prescaled 6.3 GHz clock recovery from 50 Gbit/s TDM optical signal with 50 GHz PLL using four-wave mixing in a travelling wave laser diode optical amplifier", Elect. Lett. 30 (10) p. 807 (1994), décrit un système similaire d'extraction d'horloge à 6.3 GHz d'un signal multiplexé temporellement (TDM en anglais) à 50 GHz, utilisant un PLL comprenant un TW-LDA et reposant sur l'effet de mixage quatre ondes (FWM en anglais).

Le document D5 = Electronics Letters, vol. 30, no. 21, 13 Octobre 1994, pages 1777-1778 de M. Nakazawa et al, intitulé "80 Gbit/s soliton data transmission over 500 km with unequal amplitude solitons for timing clock extraction" décrit un système experimental de transmission de solitons sans régénération sur 500 km. Ce document montre l'utilisation d'un NOLM en fibre à maintien de polarisation comme demultiplexeur optique. Un signal horloge à 10GHz est extrait du signal utile à 80 Gbit/s.

Pour ne pas rencontrer les limites de l'électronique lors du doublage de fréquence, il serait avantageux d'effectuer une conversion électro-optique avant de doubler optiquement. Dans ce cas, on a besoin d'un doubler optique de fréquence de signaux optique.

A ces fins, l'invention propose un procédé pour doubler la fréquence $f_0$ d'un signal d'horloge approximativement sinusoïdal porté par une onde optique ayant une première puissance crête-à-crête $P_{cc}$ et une première longueur d'onde $l_c$, pour fournir un signal modulé à la fréquence $2f_0$ porté par une onde optique ayant une deuxième longueur d'onde $l_s$, comprenant les étapes suivantes :

- ledit signal d'horloge à ladite fréquence $f_0$ et ayant ladite première longueur d'onde $l_c$, est introduit à l'entrée contrôle C2 d'un miroir optique non linéaire NOLM ;
- un signal continu à ladite deuxième longueur d'onde $l_s$ est introduit à l'entrée signal 1 dudit miroir optique non linéaire NOLM ;
- ledit signal modulé à la fréquence $2f_0$ porté par une onde optique ayant ladite deuxième longueur d'onde $l_s$ est récolté à la sortie 2 dudit miroir optique non linéaire NOLM ;

    où :

- lesdites première et deuxième longueurs d'onde ont sensiblement la même vitesse de groupe Vg dans ledit miroir optique non linéaire NOLM.

Selon une variante avantageuse, la valeur de la puissance crête-à-crête $P_{cc}$ est choisie bien inférieure à $P_\pi$, où $P_\pi$ est la puissance d'horloge nécessaire pour maximiser l'effet de commutation du NOLM sur le signal.

L'invention propose également une méthode de régénération d'un signal de solitons ayant un rythme de bits $f_s$ par une modulation synchrone desdits solitons à ladite fréquence $f_s$ comprenant les étapes suivantes :

- extraction d'une sous-harmonique dudit signal de solitons, ladite sous harmonique ayant une fréquence

$$f_{sh} = f_s \cdot 2^{-i},$$

$i$ entier et positif ;

- doublage optique de ladite fréquence sous harmonique $f_{sh}$ selon le procédé de l'invention : cette étape sera répétée **i** fois, pour fournir un signal d'horloge à la fréquence $f_s$ ;
- ledit signal d'horloge à la fréquence $f_s$ est appliqué à l'entrée contrôle d'un modulateur optique afin de moduler ledit signal solitons présent sur l'entrée signal dudit modulateur'
- le signal solitons ainsi modulé est récolté sur la sortie dudit modulateur.

Avantageusement, la régénération comprend en outre des étapes d'amplification et de filtrage, tel que connu de l'homme de l'art.

Selon différentes variantes du procédé de régénération selon l'invention, ladite sous-harmonique du signal solitons peut être extrait soit électroniquement, soit optiquement.

L'invention sera mieux comprise, avec ses différentes caractéristiques et avantages, à la lumière de la description détaillée qui suit, avec ses dessins annexés, dont :

- la figure 1, déjà décrite, qui montre schématiquement un dispositif de modulation synchrone de solitons, avec un circuit optoélectronique de récupération d'horloge, connu de l'art antérieur par le document D2 ;
- la figure 2, qui montre schématiquement un exemple d'un miroir non linéaire optique (NOLM) connu de l'art antérieur, et apte à être utilisé dans le dispositif de l'invention ;
- la figure 3, qui montre schématiquement un commutateur NOLM insensible à la polarisation du signal à commuter, tel que connu de l'art antérieur par le document D5 ;
- la figure 4, qui montre schématiquement la vitesse de groupe en fonction de la longueur d'onde de la lumière se propageant sur une fibre optique ;
- la figure 5, qui montre schématiquement des résultats obtenus via le procédé de l'invention, à savoir, la transmittance normalisée I, ainsi que la phase en radians Φ, en fonction de temps et pour différentes valeurs de l'efficacité η de commutation ;
- la figure 6, qui montre schématiquement un système de régénération optique de solitons mettant à profit le procédé de l'invention.
- la figure 7, qui montre des résultats de simulation numérique du facteur de qualité Q en fonction de la longueur de liaison D sur des distances transocéaniques, pour différentes valeurs de la puissance de contrôle $P_c$ ;

Les dessins sont donnés à titre d'exemples non limitatifs, illustratifs des principes de l'invention et de quelques variantes. Sur toutes les figures, les mêmes repères se réfèrent aux mêmes éléments, et l'échelle n'est pas toujours respectée pour des raisons de clarté.

La figure 2 montre schématiquement un exemple d'un miroir non linéaire optique (NOLM) connu de l'art antérieur, apte à être utilisé dans le dispositif de l'invention. De manière générale, le NOLM comprend une boucle de fibre optique L ; un premier coupleur optique C1 avec ses quatre portes 1, 2, 3, 4, ce coupleur C1 ayant un coefficient de couplage $\gamma/1-\gamma$ qui décrit le partage de puissance optique entre les différentes portes ; et un deuxième coupleur optique C2 pour injecter un signal de contrôle dans le NOLM via la fibre optique de contrôle F3.

L'adjonction éventuelle d'un amplificateur optique GL dans la boucle peut conférer un gain positif à l'ensemble, ce qui en fait un miroir non linéaire amplificateur (NALM), mais un tel dispositif ne sera pas décrit davantage ici.

Le signal optique à commuter par le NOLM est introduit par la fibre d'entrée F1 à la porte 1 du coupleur C1. Décrivons tout d'abord le cas d'un coefficient de couplage du coupleur C1 de 50/50, en l'absence d'un signal de contrôle sur la fibre F3. Dans ce cas, 50 % de la puissance dudit signal optique se trouve sur la porte 4, tandis que l'autre 50 % se trouve sur la porte 3 du coupleur C1, mais avec un déphasage relatif de $\pi/2$ radians (90°) entre les deux. Les deux signaux se propagent donc dans des sens opposés dans la boucle de fibre, qui aura une longueur de l'ordre de 5 à 10 kms. Puisque les chemins optiques des deux signaux sont identiques, les signaux arrivent sur les portes 3, 4 respectivement du coupleur C1, où ils interfèrent.

Puisque les deux signaux sont déphasés de $\pi/2$, il y a interférence destructive pour l'onde résultante dirigée vers la porte 2 du coupleur C1, donc il n'y a pas de transmission du signal vers la fibre de sortie F2. En revanche, l'interférence est constructive pour l'onde résultante dirigée vers la porte 1 du coupleur C1, donc le signal présenté sur la porte 1 est totalement réfléchi par le miroir NOLM vers la porte 1 dans ce cas.

Maintenant considérons le cas où il y a un signal de contrôle présent sur la fibre optique de contrôle F3. Ce signal sera couplé dans la boucle du NOLM par le coupleur optique C2, et se propagera dans la boucle dans le sens des aiguilles d'une montre. Les ondes du signal qui circulent dans la boucle en sens contraire ne seront pas ou très peu affectées par la présence d'un signal de contrôle. En revanche, les ondes du signal qui se propagent dans le même sens dans la boucle seront perturbées. En effet, la fibre de la boucle L présente un effet non linéaire, qui change l'indice de réfraction de la fibre en fonction de la puissance optique, ou plus exactement en fonction de l'amplitude du champ électrique dans la fibre (effet Kerr). Les champs électriques des ondes circulant ensemble, dites "en copropagation", se superposent linéairement, donc l'intensité résultante du champ électrique est plus grande que celle des ondes se propageant dans l'autre sens dans la boucle L.

L'indice de réfraction effective de la boucle L vue par les ondes en copropagation est différente de celle vue par les ondes en contre-propagation. Leurs vitesses de propagation sont donc différentes. Leurs temps d'arrivée sur le coupleur C1 sont différents, donc l'état d'interférence de ces ondes est modifié. La totalité de la puissance optique ou presque se trouve sur la porte 2 du coupleur C1, véhiculée sur la fibre optique de sortie F2.

Ainsi, la présence d'un signal de contrôle sur la fibre de contrôle F3 est capable de commander la commutation du miroir optique non linéaire, qui sera transparent en présence du signal de contrôle, et qui sera réfléchissant en l'absence d'un signal de contrôle. La commutation peut être très rapide, de l'ordre de 100 GHz au moins. L'insertion d'un élément biréfringent dans la boucle du NOLM peut invertir les caractéristiques de commutation, pour rendre le miroir transparent en l'absence du signal de contrôle, et réfléchissant en présence d'un signal de contrôle. Cet effet peut engendrer dans certains cas, des problèmes de sensitivité à la polarisation des signaux dans le régime non linéaire de fonctionnement d'un tel dispositif.

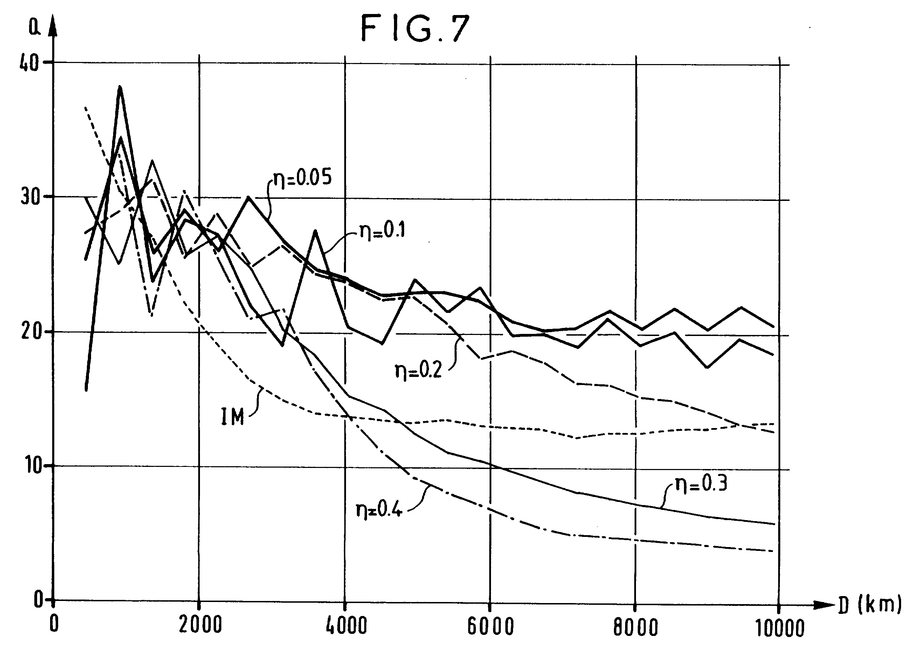

Le NOLM que nous venons de décrire est conforme à celui qui peut être utilisé dans un dispositif de régénération de solitons mettant à profit le procédé de l'invention pour doubler la fréquence d'un signal d'horloge. Un tel dispositif sera décrit ci-après plus en détail, avec référence à la figure 7.

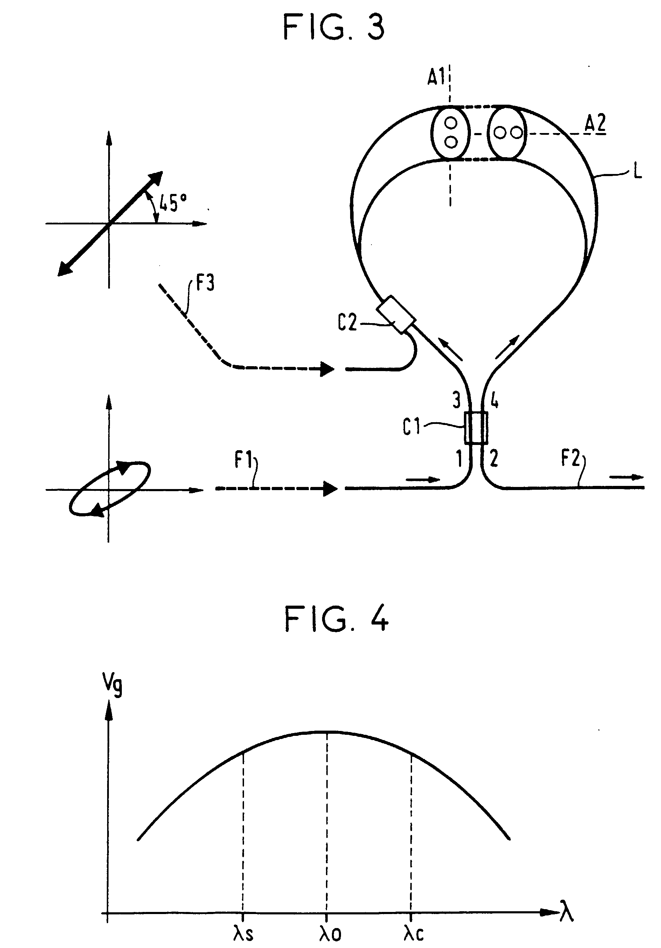

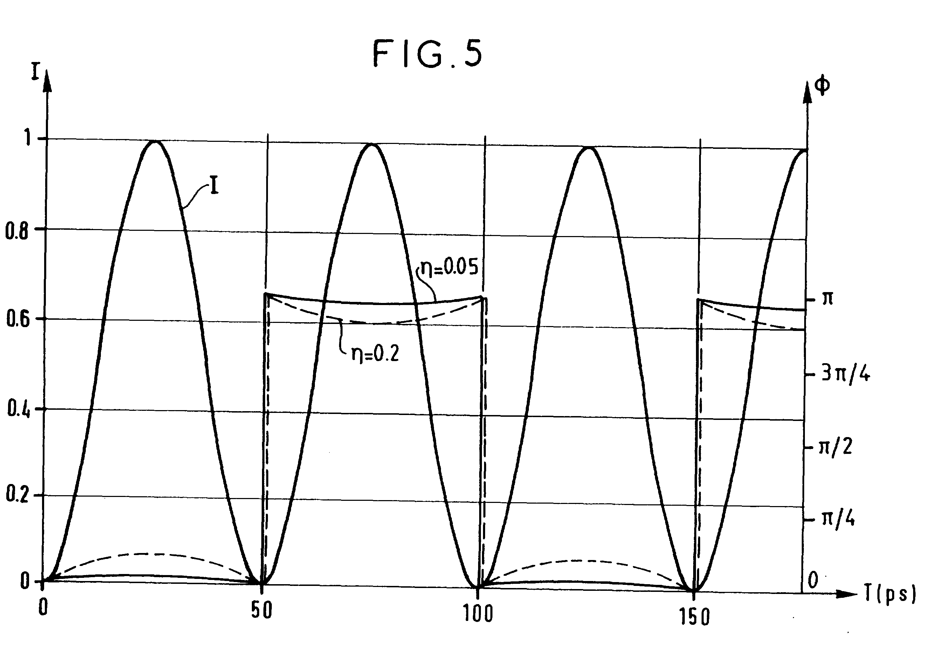

La figure 3 montre schématiquement un commutateur NOLM insensible à la polarisation du signal à commuter, tel que connu de l'art antérieur par le document D5 = K. Uchiyama et al., (1992) "Ultrafast polarisation - independent all-optical switching using a polarisation diversity scheme in the nonlinear optical loop mirror (NOLM)", electron. lett., v.28, no.20, pp. 1864-1866, 24 sept. 1992. Ce document montre l'utilisation d'un NOLM comme un commutateur, qui est rendu insensible à la polarisation de la lumière du signal à commuter. Ceci est obtenu en utilisant une fibre à maintien de polarisation, que l'on aurait coupée et tournée à 90° au point médian de la boucle du NOLM. Le principe en est illustré en figure 5.

La boucle du NOLM est constituée par exemple d'une fibre à maintien de polarisation PANDA à deux trous. En effectuant une rotation de 90° entre l'axe A1 et l'axe A2 à mi-chemin de propagation, l'axe rapide (respectivement lent) de la partie gauche devient l'axe lent (respectivement rapide) de la partie droite de la boucle sur la figure 3. La fibre de la boucle (L) est dispersive en polarisation, c'est-à-dire que la vitesse de propagation de la lumière à l'intérieur de la fibre est différente pour une polarisation alignée avec l'axe rapide que pour une polarisation orthogonale à l'axe rapide de propagation, c'est-à-dire l'axe lent de la fibre. Il est nécessaire de s'affranchir de la dispersion en polarisation, ce que l'on réalise en utilisant deux longueurs identiques de fibre ayant une disposition mutuellement orthogonale des axes A1, A2 de maintien de polarisation, ce qui aura pour effet d'annuler la dispersion de polarisation.

Pour rendre le système indépendant de la polarisation du signal commuté, la polarisation du signal de contrôle qui est introduit dans la boucle L par le coupleur C2 sur la fibre d'entrée de contrôle F3 est injecté à 45° des deux axes orthogonaux A1, A2. De la même manière que précédemment, les effets de la dispersion de polarisation s'annulent.

La figure 4 montre schématiquement la vitesse de groupe Vg en fonction de la longueur d'onde de la lumière qui se propage le long de la fibre dans le NOLM. Pour obtenir des résultats optimaux en utilisant le procédé selon l'invention, il est avantageux d'utiliser des longueurs d'onde du signal d'horloge $\lambda c$ et du signal soliton $\lambda s$ ayant la même vitesse de groupe. Comme montré sur la figure 4, ceci peut être réalisé facilement en choisissant deux longueurs d'onde de part et d'autre de la longueur d'onde de dispersion zéro, $\lambda_0$.

Quand la vitesse de groupe Vg est la même pour les deux longueurs d'onde $\lambda_c$ et $\lambda_s$, le coefficient de transmission d'un NOLM en intensité est donnée par:

$$ I = \sin^2\left[\frac{\pi}{2}\frac{P_{cc}}{P_{\pi}}\sin\left(2\pi f_0 t\right)\right] $$

Lorsque $\eta = P_{cc} / P_{\pi} << 1$, le coefficient de transmission en intensité I peut être approximé par une sinusoïde de fréquence $2f_0$.

La figure 5 montre schématiquement des résultats obtenus via le procédé de l'invention, à savoir, la transmittance normalisée I ainsi que la phase $\Phi$ de modulation (en radians), en fonction de temps en picosecondes et pour différentes valeurs de l'efficacité $\eta$ de commutation. On voit que pour un signal de contrôle et donc une modulation de phase ayant une période de 100 picosecondes, la transmittance ressemble à une sinusoïde ayant une période de 50 picosecondes. C'est à dire que la fréquence de la transmittance est le double de la fréquence de contrôle. En revanche, la modulation de phase est presque carrée pour $\eta$ très faible ($\eta$ = 0.05), mais comporte un "chirp" à des valeurs plus élevées ($\eta$ = 0.2).

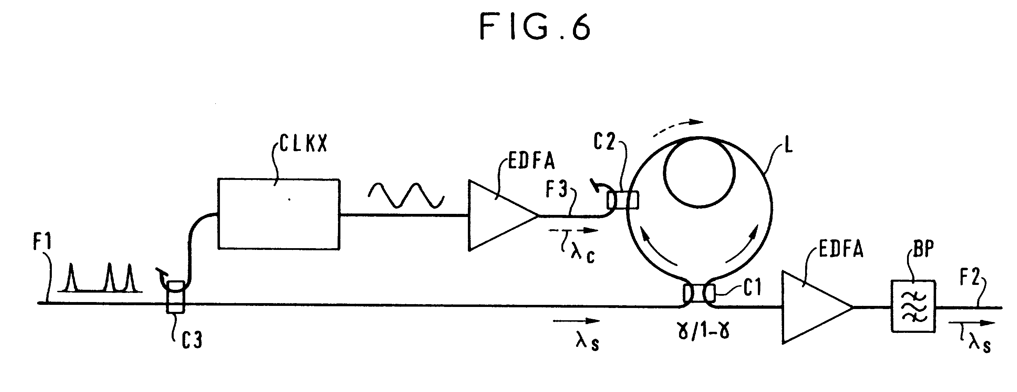

La figure 6 montre schématiquement un système de régénération optique de solitons mettant à profit le procédé de doublage optique de l'invention.

Dans le dispositif montré sur la figure 6, le signal optique de type soliton à régénérer, ayant une fréquence bit de $2f_0$, arrive par la fibre optique d'entrée F1, où un coupleur optique C3 prélève une partie du signal pour en extraire un signal d'horloge par les moyens de récupération d'horloge CLKX, à une fréquence sous-harmonique $f_0$. Ensuite, ces moyens CLKX appliquent ledit signal optique d'horloge à une fréquence sous-harmonique $f_0$ sur l'entrée de contrôle du NOLM via le coupleur C2. Le signal soliton sera toujours à la même longueur d'onde $\lambda_s$. La longueur d'onde $\lambda_c$ du signal d'horloge sera de préférence légèrement différente de celle du signal soliton $\lambda_s$, pour permettre le filtrage bloquant de l'horloge en sortie du dispositif par un filtre passebande BPC dont la bande passante est centrée sur la longueur d'onde $\lambda_s$ du soliton. Par ailleurs, on aura pris le soin de choisir les longueurs d'onde $\lambda_s$ et $\lambda_c$ avec la même vitesse de groupe, comme expliqué ci-dessus en référence à la figure 4.

En aval du coupleur de prélèvement C3, le signal soliton continue à se propager sur la fibre optique d'entrée F1 jusqu'à la porte d'entrée 1 du coupleur C1 du NOLM. Selon une variante du dispositif de la figure 6, un amplificateur optique EDFA peut être placé en amont (voir en aval) du miroir NOLM pour compenser les pertes en ligne subies par le soliton depuis la dernière fois qu'il a été amplifié ou régénéré.

Le fonctionnement du NOLM est similaire à ce qui a été décrit ci-dessus en référence à la figure 2. Les solitons arrivant à la porte 1 du coupleur C1 du NOLM sont ainsi modulés par le signal d'horloge appliqué à l'entrée de contrôle F3 via le coupleur de contrôle C2. Les temps de trajet de l'horloge et des solitons selon leurs trajets respectifs doivent être ajustés pour permettre la synchronisation de ces signaux quand ils circulent dans le NOLM.

Le signal soliton est ainsi modulé par le NOLM, ce qui permet de procurer une modulation d'amplitude des solitons. En effet, la modulation d'amplitude est jugée suffisante pour diminuer, voire éliminer la gigue Gordon-Haus à la sortie du dispositif de régénération.

La figure 7 montre des résultats de simulation numérique du facteur de qualité Q en fonction de la longueur de liaison D sur des distances transocéaniques, de l'ordre de 10 000 km, pour différentes valeurs de la puissance de contrôle $P_c$ ; c'est-à-dire pour différent valeurs de l'efficacité de commutation $\eta$. Les résultats de simulation montrent que les valeurs plus faibles sont les plus avantageuses pour obtenir la meilleure qualité Q sur des liaisons de longue distance. Une courbe donnant les résultats pour la modulation d'intensité uniquement est donnée à titre de comparaison.

La simulation de la figure 7 utilise les paramètres suivants : débit de 20 Gbit\s, liaison de D km composée d'une pluralité de tronçons de 45 km avec des amplificateurs optiques EDFA disposés entre les tronçons pour un total de 9900kms. L'atténuation de fibre est fixée à $\alpha$ = 0.23 dB/km, et la dispersion chromatique d'une fibre classique est fixée à D = 0.25 ps/nm/km. A chaque amplificateur EDFA, le bruit ASE est ajouté au signal, et le gain est ajusté pour fournir une puissance constante. Le signal est PRBS (acronyme anglais pour signal de bits pseudo-aléatoire) de 128 bits de 10 ps codés en impulsions soliton ayant la forme sech$^2$ clas-

sique.

Il est préférable d'utiliser une fibre à maintien de polarisation pour la réalisation d'un doubler optique selon le procédé de l'invention, conformément à la figure 3, déjà décrite. On s'arrange pour injecter le signal optique d'horloge dans le NOLM via le coupleur C2 avec son axe de polarisation orienté à 45° par rapport aux axes A1, A2 de maintien dans la fibre de boucle L. Le fonctionnement du dispositif est ainsi insensible à la polarisation du signal soliton à moduler, ce qui constitue un avantage majeur par rapport aux réalisations de l'art antérieur.

Les moyens CLKX de récupération d'horloge peuvent être soit des moyens tout optiques, soit des moyens optoélectroniques.

La fréquence de base $f_{sh}$ peut être doublée **i** fois en répétant le procédé de l'invention **i** fois. Ceci peut être réalisé avec un dispositif comprenant une cascade de **i** NOLMs, avec la sortie signal d'un j$^{ième}$ NOLM raccordée à l'entrée contrôle du (j+1)$^{ième}$ NOLM, pour tout j entier et j < i. La fréquence $f_s$ à la sortie du dernier NOLM sera :

$$f_s = 2^i f_{sh}.$$

Le dispositif de l'invention a été décrit en faisant référence à quelques exemples seulement de réalisations utilisant tels ou tels dispositifs de l'art connu pour constituer le NOLM, pour récupérer et fournir le signal d'horloge sur l'entrée commandé du NOLM, et pour résoudre quelques mineurs problèmes que l'on pourra rencontrer lors de la réalisation d'un système de régénération en ligne de solitons. La liste de réalisations pouvant mettre à profit le procédé de l'invention n'est bien sûr pas exhaustive, et l'homme de l'art saura adapter les principes du procédé de l'invention à ses propres dispositifs selon ses propres besoins.

**Revendications**

1.  Procédé pour doubler la fréquence $f_0$ d'un signal d'horloge approximativement sinusoïdal porté par une onde optique ayant une première puissance crête-à-crête $P_{cc}$ et une première longueur d'onde $\lambda_c$, pour fournir un signal modulé à la fréquence $2f_0$ porté par une onde optique ayant une deuxième longueur d'onde $\lambda_s$, comprenant les étapes suivantes :

    .   ledit signal d'horloge à ladite fréquence $f_0$ et ayant ladite première longueur d'onde $\lambda_c$, est introduit à l'entrée contrôle (C2) d'un miroir optique non linéaire NOLM ;
    .   un signal continu à ladite deuxième longueur d'onde $\lambda_s$ est introduit à l'entrée signal (1) dudit miroir optique non linéaire NOLM ;
    .   ledit signal modulé à la fréquence $2f_0$ porté par une onde optique ayant ladite deuxième longueur d'onde $\lambda_s$ est récolté à la sortie (2) dudit miroir optique non linéaire NOLM ;

    où :

    .   lesdites première et deuxième longueurs d'onde ont sensiblement la même vitesse de groupe Vg dans ledit miroir optique non linéaire NOLM.

2.  Procédé selon la revendication 1, caractérisé en ce que la valeur de la puissance crête-à-crête $P_{cc}$ est choisie bien inférieure à $P_\pi$, où $P_\pi$ est la puissance dudit signal d'horloge nécessaire pour maximiser l'effet de commutation dudit NOLM sur ledit signal.

3.  Méthode de régénération d'un signal de solitons ayant un rythme de bits $f_s$ par une modulation synchrone desdits solitons à ladite fréquence $f_s$ comprenant les étapes suivantes :

    .   extraction d'une sous-harmonique dudit signal de solitons, ladite sous harmonique ayant une fréquence

    $$f_{sh} = f_s \cdot 2^{-i},$$

    *i* entier et positif ;
    .   doublage optique de ladite fréquence sous harmonique $f_{sh}$ selon la revendication 1 ou 2 : cette étape sera répétée **i** fois, pour fournir un signal d'horloge à la fréquence $f_s$ ;
    .   ledit signal d'horloge à la fréquence $f_s$ est appliqué à l'entrée contrôle d'un modulateur optique afin de moduler ledit signal solitons présent sur l'entrée signal dudit modulateur ;
    .   le signal solitons ainsi modulé est récolté sur la sortie dudit modulateur.

4.  Méthode de régénération d'un signal de solitons ayant un rythme de bits $f_s$ par une modulation synchrone desdits solitons à ladite fréquence $f_s$ comprenant les étapes suivantes :

    .   extraction d'une sous-harmonique dudit signal de solitons, ladite sous harmonique ayant une fréquence

    $$f_{sh} = f_s \cdot 2^{-i},$$

    *i* entier et positif ;
    .   doublage optique de ladite fréquence sous harmonique $f_{sh}$ selon la revendication 1 ou 2 : cette étape sera répétée **i-1** fois, pour fournir un signal d'horloge à la fréquence $f_s$ / 2;

- ledit signal d'horloge à la fréquence $f_s$/2 est appliqué à l'entrée contrôle d'un NOLM afin de moduler ledit signal solitons présent sur l'entrée signal dudit NOLM;
- le signal solitons ainsi modulé est récolté sur la sortie dudit NOLM.

5. Méthode de régénération selon l'une quelconque des revendications 3 ou 4, comprenant en outre des étapes d'amplification et de filtrage.

6. Procédé selon l'une quelconque des revendications 1 ou 2, caractérisé en ce que ladite sous-harmonique du signal solitons est extraite optiquement et convertie en un signal électronique avant d'être appliquée sur ladite entrée contrôle dudit modulateur optique.

7. Procédé selon l'une quelconque des revendications 1 ou 2, caractérisé en ce que ladite sous-harmonique du signal solitons est extraite optiquement et n'est pas convertie en un signal électronique avant d'être appliquée sur ladite entrée contrôle dudit modulateur optique.

## Claims

1. Method of doubling the frequency $f_0$ of an approximately sinusoidal clock signal conveyed by an optical wave having a first peak-to-peak power $P_{cc}$ and a first wavelength $\lambda_c$ to supply a modulated signal at the frequency $2f_0$ conveyed by an optical wave having a second wavelength $\lambda_s$, comprising the following steps:

- said clock signal at said frequency $f_0$ and having said first wavelength $\lambda_c$ is introduced at the control input (C2) of a non-linear optical loop mirror NOLM,
- a continuous signal at said second wavelength $\lambda_s$ is introduced at the signal input (1) of said non-linear optical loop mirror NOLM, and
- said modulated signal at said frequency $2f_0$ conveyed by an optical wave having said second wavelength $\lambda_s$ is collected at the output (2) of said non-linear optical loop mirror NOLM,
- said first and second wavelengths having substantially the same group velocity Vg in said non-linear optical loop mirror NOLM.

2. Method according to claim 1 wherein the value of the peak-to-peak power Pcc is made much less than P$\pi$, where P$\pi$ is the power of said clock signal required to maximize the switching effect of said NOLM on said signal.

3. Method of regenerating a soliton signal having a bit rate $f_s$ by synchronous modulation of said solitons at said frequency $f_s$, comprising the following steps:

- extracting a sub-harmonic of said soliton signal having a frequency

$$f_{sh} = f_s.2^{-i}$$

where $i$ is a positive integer,
- optical doubling of said sub-harmonic frequency $f_{sh}$ according to claim 1 or 2: this step being repeated i times to supply a clock signal at the frequency $f_s$,
- applying said clock signal at the frequency $f_s$ to the control input of an optical modulator in order to modulate said soliton signal present at the signal input of said modulator, and
- collecting the soliton signal modulated as above at the output of said modulator.

4. Method of regenerating a soliton signal having a bit rate of $f_s$ by synchronous modulation of said solitons at said frequency $f_s$, comprising the following steps:

- extracting a sub-harmonic of said soliton signal having a frequency

$$f_{sh} = f_s.2^{-i}$$

where $i$ is a positive integer,
- optical doubling of said sub-harmonic frequency $f_{sh}$ according to claim 1 or 2: this step being repeated i-1 times to supply a clock signal at the frequency $f_s$/2,
- applying said clock signal at the frequency $f_s$/2 to the control input of a NOLM in order to modulate said soliton signal present at the signal input of said NOLM, and
- collecting the soliton signal modulated as above at the output of said NOLM.

5. Regeneration method according to either of claims 3 and 4, further comprising amplification and filtering steps.

6. Method according to either of claims 1 and 2 wherein said sub-harmonic of said soliton signal is extracted optically and converted into an electronic signal before it is applied to said control input of said optical modulator.

7. Method according to either of claims 1 and 2 wherein said sub-harmonic of said soliton signal is extracted optically and is not converted into an electronic signal before it is applied to said control input of said optical modulator.

**Patentansprüche**

1. Verfahren zum Verdoppeln der Frequenz $f_0$ eines näherungsweise sinusförmigen Taktsignals, das von einer optischen Welle getragen wird, die eine erste Spitzenleistung $P_{cc}$ und eine erste Wellenlänge $\lambda_c$ hat, um ein moduliertes Signal bei der Frequenz $2f_0$ zu liefern, das von einer optischen Welle mit einer zweiten Wellenlänge $\lambda_s$ getragen wird, mit den folgenden Schritten:

     das Taktsignal mit der Frequenz $f_0$ und der ersten Wellenlänge $\lambda_c$ wird am Steuereingang (C2) eines nichtlinearen optischen Spiegels NOLM eingegeben;

     ein kontinuierliches Signal mit der zweiten Wellenlänge $\lambda_s$ wird am Signaleingang (1) des nichtlinearen optischen Spiegels NOLM eingegeben;

     das mit der Frequenz $2f_0$ modulierte, von einer optischen Welle mit der zweiten Wellenlänge $\lambda_s$ getragene Signal wird am Ausgang (2) des nichtlinearen optischen Spiegels NOLM abgenommen;

     wobei:
die erste und die zweite Wellenlänge im wesentlichen die gleiche Gruppengeschwindigkeit in dem nichtlinearen optischen Spiegel NOLM haben.

2. Verfahren nach Anspruch 1, dadurch gekennzeichnet, daß der Wert der Spitzenleistung $P_{cc}$ deutlich kleiner als $P_\pi$ gewählt wird, wobei $P_\pi$ die Leistung des Taktsignals ist, die notwendig ist, um die Schaltwirkung des NOLM auf das Signal zu maximieren.

3. Verfahren zum Regenerieren eines Solitonensignals mit einem Bittakt $f_s$ durch eine synchrone Modulation der Solitonen mit der Frequenz $f_s$ mit den folgenden Schritten:

     Extrahieren einer Unterharmonischen des Solitonensignals, wobei die Unterharmonische eine Frequenz $f_{sh} = f_s \times 2^{-i}$ hat, wobei i eine positive ganz Zahl ist;

     optische Verdopplung der unterharmonischen Frequenz $f_{sh}$ nach Anspruch 1 oder 2: dieser Schritt wird i-mal wiederholt, um ein Taktsignal mit der Frequenz $f_s$ zu liefern;

     das Taktsignal mit der Frequenz $f_s$ wird an den Steuereingang eines optischen Modulators angelegt, um das am Signaleingang des Modulators vorhandene Solitonensignal zu modulieren;

     das so modulierte Solitonensignal wird am Ausgang des Modulators abgenommen.

4. Verfahren zum Regenerieren eines Solitonensignals mit einem Bittakt $f_s$ durch eine synchrone Modulation der Solitonen mit der Frequenz $f_s$, mit den Schritten:

     Extrahieren einer Unterharmonischen des Solitonensignals, wobei die Unterharmonische eine Frequenz $f_{sh} = f_s \times 2^{-i}$ hat, wobei i eine positive ganz Zahl ist;

     optische Verdopplung der unterharmonischen Frequenz $f_{sh}$ nach Anspruch 1 oder 2: dieser Schritt wird (i-1)-mal wiederholt, um ein Taktsignal mit der Frequenz $f_s/2$ zu liefern;

     das Taktsignal mit der Frequenz $f_s/2$ wird an den Steuereingang eines NOLM angelegt, um das am Signaleingang des NOLM vorhandene Solitonensignal zu modulieren;

     das so modulierte Solitonensignal wird am Ausgang des NOLM abgenommen.

5. Verfahren zum Regenerieren nach einem beliebigen der Ansprüche 3 oder 4, das ferner Schritte der Verstärkung und Filterung umfaßt.

6. Verfahren nach einem beliebigen der Ansprüche 1 oder 2, dadurch gekennzeichnet, daß die Unterharmonische des Solitonensignals optisch extrahiert und in ein elektronisches Signal umgewandelt wird, bevor sie an den Steuereingang des optischen Modulators angelegt wird.

7. Verfahren nach einem beliebigen der Ansprüche 1 oder 2, dadurch gekennzeichnet, daß die Unterharmonische des Solitonensignals optisch extrahiert und nicht in ein elektronisches Signal umgewandelt wird, bevor sie an den Steuereingang des optischen Modulators angelegt wird.

# FIG. 1

# FIG. 2

FIG. 3

FIG. 4

FIG.5

EP 0 763 912 B1

# FIG.6

FIG.7

EP 0 763 912 B1